## Europäisches Patentamt

## European Patent Office

## Office européen des brevets

(19)

(11) Veröffentlichungsnummer: **0 179 109**
**B1**

(12) EUROPÄISCHE PATENTSCHRIFT

(45) Veröffentlichungstag der Patentschrift:
29.06.88

(51) Int. Cl.⁴: **G 01 F 1/58**

(21) Anmeldenummer: **85902028.1**

(22) Anmeldetag: **19.04.85**

(86) Internationale Anmeldenummer:
**PCT/EP 85/00176**

(87) Internationale Veröffentlichungsnummer:
**WO 85/04954 (07.11.85 Gazette 85/24)**

(54) MESSWERTAUFNEHMER FÜR MAGNETISCH-INDUKTIVE DURCHFLUSSMESSGERÄTE.

(30) Priorität: 26.04.84 DE 3415538

(43) Veröffentlichungstag der Anmeldung:
30.04.86 Patentblatt 86/18

(45) Bekanntmachung des Hinweises auf die Patenterteilung:
29.06.88 Patentblatt 88/26

(84) Benannte Vertragsstaaten:
AT BE CH DE FR GB IT LI LU NL SE

(56) Entgegenhaltungen:
DE-A-1 773 773
DE-A-2 950 039

Patents Abstracts of Japan, Band 8, Nr. 183, Seite (P-196) (162) Derwent Publications, London (GB); JP-A- 5975118 (YOKOGAWA HOKUSHIN DENKI K.K.) 27. April 1984

(73) Patentinhaber: RHEOMETRON AG,
Schützenmattstrasse 43, CH- 4003 Basel (CH)

(72) Erfinder: VAN DER POL, Ronald, Victor
Hugostraat 27, NL- 5924 AK Venlo (NL)

(74) Vertreter: Ackmann, Günther, Dr.- Ing.,
Claubergstrasse 24 Postfach 10 09 22, D-4100 Duisburg 1 (DE)

## Beschreibung

Die Erfindung betrifft einen Meßwertaufnehmer für magnetisch-induktive Durchflußmeßgeräte, bei dem die Meßelektroden mit einem Schaft durch den Mantel des Meßrohres führen, mit diesem dicht verbunden sind und der mit dem durchströmenden Medium elektrisch gleitend in Verbindung stehende Elektrodenkopf in einer Vertiefung der Innenfläche des Meßrohres liegt und von einer Kappe abgedeckt ist, die fluchtend zur Innenfläche des Meßrohres verläuft.

Bei Meßwertaufnehmern dieser Art, wie sie beispielsweise aus der WO 83/02000 bekannt sind, liegt die Oberfläche der Meßelektroden immer fluchtend zur Innenfläche des Meßrohres. Das gilt auch für Elektroden, welche entsprechend dem DE-A-2 950 039 aus pulver- oder faserförmigen Teilchen eines elektrisch leitenden Stoffes bestehen, welche im Elektrodenbereich in die elektrisch isolierende Auskleidung eingebettet sind. Solche Elektroden haben den Nachteil, daß sie mit vom durchströmenden Medium mitgeführten Feststoffteilchen unmittelbar beaufschlagt werden können. Dies führt häufig zu Fehlmessungen. Dabei kommt es vor, daß sich Feststoffteilchen an den meist höckerartig herausragenden Oberflächen der Elektrodenköpfe festsetzen, oder auf sie einwirken. Andererseits ist aus der US-A-4 388 834 ein Meßwertaufnehmer bekannt, bei dem der Innenmantel des Meßrohres mit einer isolierenden Kunststoffbeschichtung versehen ist und eine den vertieft liegenden Elektrodenschaft einfassende Kappe aus einem elektrisch leitenden Kunststoff besteht. Bei dieser Ausführung bildet die fluchtend zur Innenfläche des Mantels verlaufende Kappenfläche die Grenzfläche zur vorbeiströmenden Meßflüssigkeit und ist störenden Strömungseinflüssen und Verschmutzungen ausgesetzt. Die gleichen Nachteile gelten auch für eine ähnliche Elektrodeneinfassung nach der GB-A-2 068 122, bei der die Innenbeschichtung des Meßrohres aus einem isolierenden Glas und die den Elektrodenschaft einfassende Kappe aus einem elektrisch leitenden Glas besteht.

Der Erfindung liegt die Aufgabe zugrunde, bei Meßwertaufnehmern der gattungsgemäßen Art dafür Sorge zu tragen, daß eine Verschmutzung oder Beeinträchtigung der Elektrodenoberflächen oder eine Beeinträchtigung der Meßergebnisse durch Feststoffteilchen, die vom flüssigen Medium mitgeführt werden, unterbunden wird.

Diese Aufgabe wird erfindungsgemäß dadurch gelöst, daß die Kappe aus porösem keramischen Werkstoff, aus Glasfritte oder aus porösem Kunststoff besteht.

In vorteilhafter Weise liegt die Oberfläche der Meßelektrode geschützt unter einer porösen Kappe, durch welche jedoch Flüssigkeit eindringen kann, die mit dem durchströmenden Medium eine elektrisch leitende Verbindung schafft, wobei die Grenzschicht Elektrodenfläche/Flüssigkeit in der Vertiefung liegt und von der das Meßergebnis beeinträchtigenden Strömung nicht beeinflußt wird. Da die Kappe selbst mit ihrer Oberfläche fluchtend zur Innenfläche des Meßrohres verläuft, ist sie gegenüber dem strömenden Medium geschützt, so daß auch von der Flüssigkeit mitgerissene harte Feststoffteilchen keinen Abrieb verursachen. Dies gilt besonders, wenn die Kappe aus einem entsprechend harten porösen Werkstoff besteht. Die Porosität ist jeweils so auszuwählen, daß die Kappe flüssigkeitsdurchlässig ist, jedoch etwaige Feststoffteilchen des Mediums nicht zur Elektrodenoberfläche durchläßt. Die Tiefe der Kappe kann verschieden sein und liegt vorzugsweise etwa zwischen 1 bis 20 mm.

Der Gegenstand der Erfindung ist in der Zeichnung in zwei Ausführungsbeispielen erläutert; es zeigt:

Fig. 1    einen mittleren Längsschnitt durch eine Meßelektrode,

Fig. 2    den Gegenstand der Fig. 1, jedoch ohne Kappe und

Fig. 3    ein zweites Ausführungsbeispiel.

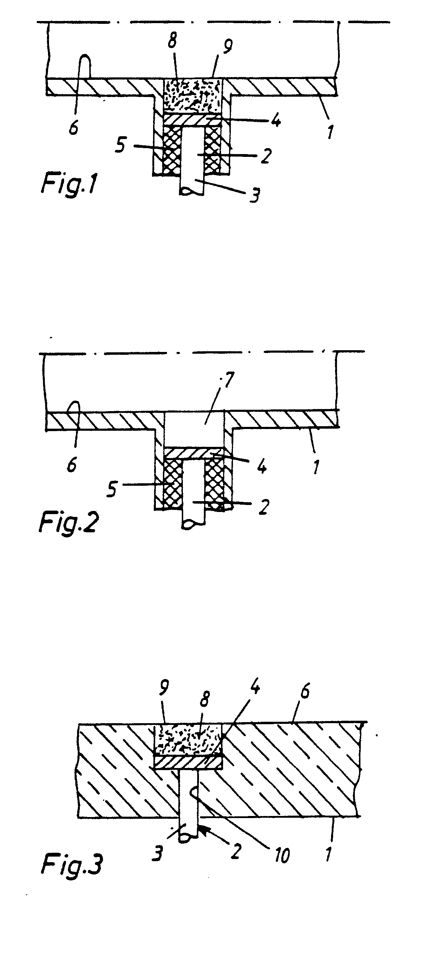

In Fig. 1 ist von einem Meßrohr 1 lediglich ein kleiner Ausschnitt gezeigt. Dieses Meßrohr 1 kann entweder aus keramischem Werkstoff, aus Kunststoff oder aus einem Metallrohr bestehen, das auf seiner Innenfläche mit einer Isolationsschicht versehen ist (nicht dargestellt). In der schematischen Darstellung nach den Fig. 1 und 2 ist im Mantel dieses Meßrohres 1 eine etwa radial verlaufende Bohrung vorgesehen, in der eine Meßelektrode 2 angeordnet ist. Der Schaft 3 der Meßelektrode 2 kann beispielsweise mittels eines Dichtungsmaterials 5 flüssigkeits- und druckdicht eingebettet, eingesintert oder eingeklebt sein. Wesentlich ist, daß die nach innen weisende Elektrodenoberfläche des Elektrodenkopfes 4 gegenüber der Innenfläche 6 des Meßrohres 1 zurückgesetzt ist, so daß eine Vertiefung 7 verbleibt, in der eine Kappe 8 aus einem porösen Werkstoff angeordnet werden kann. Diese Kappe 8 liegt mit ihrer Oberfläche 9 fluchtend zur Innenfläche 6 des Meßrohres 1.

Die Elektrodenform kann beliebig sein, ebenso kann der Werkstoff für die Elektroden verschieden sein.

Die Kappe 8 kann auf verschiedene Weise ausgebildet und im Meßrohr 1 befestigt sein. Als Werkstoff für die Kappe 8 kommt ein poröser keramischer Werkstoff mit Filtereigenschaften, eine Glasfritte oder auch ein poröser Kunststoff in Betracht. Falls das Meßrohr 1 aus Keramik besteht, kann auch die Kappe 8 aus einem gleichen, jedoch porösen Keramikwerkstoff bestehen.

Der Durchmesser und die Höhe der Kappe 8 sind den Abmessungen des Meßwertaufnehmers angepaßt. Die Höhe liegt vorzugsweise bei etwa 1 bis 20 mm.

Bei dem in Fig. 2 dargestellten Ausführungsbeispiel ist für den Schaft 3 der Meßelektrode 2 im Mantel des Meßrohres 1 eine Bohrung 10 angebracht, in welche der Schaft 3 eingesteckt und beispielsweise entsprechend der WO 83/02000 dicht eingesintert ist.

**Patentansprüche**

1. Meßwertaufnehmer für magnetisch-induktive Durchflußmeßgeräte, bei dem die Meßelektroden (2) mit einem Schaft (3) durch den Mantel des Meßrohres (1) führen, mit diesem dicht verbunden sind und der mit dem durchströmenden Medium elektrisch leitend in Verbindung stehende Elektrodenkopf (4) in einer Vertiefung (7) der Innenfläche (6) des Meßrohres (1) liegt und von einer Kappe (8) abgedeckt ist, die fluchtend zur Innenfläche (6) des Meßrohres (1) verläuft, dadurch gekennzeichnet, daß die Kappe (8) aus porösem keramischem Werkstoff, aus Glasfritte oder aus porösem Kunststoff besteht.

2. Meßwertaufnehmer nach Anspruch 1, dadurch gekennzeichnet, daß die Höhe der Kappe (8) etwa 1 bis 20 mm beträgt.

**Claims**

1. A transducer for magnetic inductive flowmeters in which a shank (3) of the measuring electrodes (2) extends through the jacket of the measuring pipe (1), the measuring electrodes are connected in sealing-tight relationship to said jacket and the electrode head (4) which is electrically conductively connected to the traversing medium is situated in a recess (7) of the inner surface (6) of the measuring pipe (1) and is covered by a cap (8) which extends in alignment with the inner surface (6) of the measuring pipe (1), characterised in that the cap (8) consists of porous ceramic material, glass frit or porous plastic.

2. A transducer according to claim 1, characterised in that the height of the cap (8) is about 1 to 20 mm.

**Revendications**

1. Capteur de mesure pour des débitmètres magnéto-inductifs, dans lequel les électrodes de mesure (2) traversent, par une tige (3), l'enveloppe du tube de mesure et sont reliées de façon étanche à cette dernière et dans lequel la tête d'électrode (4), qui est reliée de façon électriquement conductrice au milieu circulant dans le tube, est située dans un renfoncement (7) de la surface intérieure (6) du tube de mesure (1) et est recouverte par un capuchon (8), qui se termine en étant de niveau avec la surface intérieure (6) du tube de mesure (1), caractérisé par le fait que le capuchon (8) est réalisé en un matériau céramique poreux, par une fritte de verre ou par une matière plastique poreuse.

2. Capteur de mesure suivant la revendication 1, caractérisé par le fait que la hauteur du capuchon (8) est comprise entre environ 1 et 20 mm.

Fig.1

Fig.2

Fig.3